## Europäisches Patentamt

## European Patent Office

## Office européen des brevets

(19)

(11) Veröffentlichungsnummer: **0 153 964**
**B1**

(12)  **EUROPÄISCHE PATENTSCHRIFT**

(45) Veröffentlichungstag der Patentschrift:
28.10.87

(51) Int. Cl.⁴: **H 04 N 5/225**, G 03 B 3/10

(21) Anmeldenummer: **84101835.1**

(22) Anmeldetag: **22.02.84**

(54) Schaltungsanordnung für eine Steuereinrichtung zur Fokuseinstellung eines Linsensystems.

(43) Veröffentlichungstag der Anmeldung:
**11.09.85 Patentblatt 85/37**

(45) Bekanntmachung des Hinweises auf die Patenterteilung:
**28.10.87 Patentblatt 87/44**

(84) Benannte Vertragsstaaten:
**DE FR GB**

(56) Entgegenhaltungen:
DE - A - 3 222 663
GB - A - 2 082 878

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk,
N.Y. 10504 (US)**

(84) Benannte Vertragsstaaten: **FR GB**

(72) Erfinder: **Baier, Heinz, Ing. grad., Schwenninger
Strasse 14, D-7032 Sindelfingen 6 (DE)**
Erfinder: **Kallmeyer, Michael, Ing. grad., Sperberweg 24,
D-7030 Böblingen (DE)**
Erfinder: **Koepp, Peter, Dipl.-Informatiker, Erlenweg 3,
D-7039 Weil im Schönbuch (DE)**
Erfinder: **Pfeffer, Erwin, Dipl.-Ing., Teckstrasse 12,
D-7031 Holzgerlingen (DE)**
Erfinder: **Schneiderhan, Martin, Ebinger Weg 23,
D-7000 Stuttgart 80 (DE)**

(74) Vertreter: **Mönig, Anton, Dipl.-Ing., IBM Deutschland
GmbH Schönaicher Strasse 220, D-7030 Böblingen (DE)**

EP 0 153 964 B1

**Beschreibung**

Die Erfindung betrifft eine Schaltungsanordnung für eine Steuereinrichtungn zur Fokuseinstellung eines Linsensystems. Dabei werden unter Steuerung seitens eines Taktgebers zugeführte Bildsignale, die sich aus Kontrastunterschieden, bedingt durch statische Schwarzweiss-Übergänge, in der Bildebene ergeben, Speicher- und Vergleichsmittel zur Hilfe genommen, um bei schrittweiser Näherung eine optimale Fokussierung zu erhalten.

Es ist bereits eine automatische Entfernungseinstellungseinrichtung mit einer Schaltungsanordnung gemäss dem Oberbegriff des Patentanspruchs 1 aus der Zeitschrift «Funkschau», Heft 2, 1983, auf den Seiten 44 und 45 bekannt geworden, bei der die automatische Scharfeinstellung durch Triangulation mittels zweier von einem Objekt im Winkel zueinander ausgehender Strahlengänge durchgeführt wird, wovon der erste das Referenzbild und der zweite das zu vergleichende Bild überträgt. Durch zwei starre Spiegel werden die Strahlengänge auf die versilberten Flächen eines einzigen zwischen den Strahlengängen liegenden Prismas umgelenkt, um dann von den Prismenflächen auf einen Referenzbereich und einen Vergleichsbereich einer CCD-Zeile in Bildebene reflektiert zu werden. Die beiden Auftreffpunkte der den Strahlengängen zugeordneten Lichtstrahlen sind in der linearen CCD-Zeile mehr oder weniger voneinander entfernt, je nachdem, wie gross der Winkel zwischen den beiden vom Objekt ausgehenden Strahlengängen ist; was dann als Mass für die jeweilige Objektiveinstellung angesehen werden kann. Aus der Anzahl der Taktimpulse zwischen den beiden Auftreffpunkten auf der linearen CCD-Zeile wird die Stellgrösse gewonnen, die nötig ist, um mit einem kleinen Stellmotor das Objektiv auf die exakte Entfernung einzustellen. Ein Getriebe überträgt hierbei die Schaftdrehung des Stellmotors auf den verschiebbaren Teil des Objektivs, welcher dem sonst üblichen Objektivring zur Scharfeinstellung entspricht.

Eine weitere Möglichkeit für eine dem Oberbegriff des Patentanspruchs 1 zugrundeliegende Schaltungsanordnung ist in der DE-OS 3 222 663 angegeben, wobei ebenfalls ein Halbleiter-Bildaufnehmer in der Bildebene aus zwei voneinander getrennten Bereichen besteht, die jedoch jeweils gleiche Anzahl von Bildelementen enthalten. Diesen beiden Halbleiterbereichen des Bildaufnehmers ist je eine Signalformungs-Baugruppe nachgeschaltet, die aus der Summe aller Spannungsunterschiede je zwei benachbarter Bildelemente des jeweils betreffenden Bildbereichs ein dementsprechendes Integrations-Ausgangssignal ableitet und speichert.

Bei fehlender Fokussierung fallen die Integrations-Ausgangssignale der beiden Signalformungs-Baugruppen unterschiedlich aus, was mittels eines Differenzverstärkers gegenüber einer hieran angelegten Bezugsspannung festgestellt wird. Mit Hilfe eines am Ausgang des Differenzverstärkers liegenden Spannungsdiskriminators wird ermittelt, ob die abgegebene Signalspannung zwischen zwei Vergleichsspannungen oder ausserhalb hiervon liegt. In Abhängigkeit vom Messergebnis wird das Objektiv zur optimalen Fokuseinstellung nachgestellt.

Während es sich beim bisher angeführten Stand der Technik um die optimale Fokuseinstellung eines optischen Linsensystems handelt, ist in der DE-OS 3 131 749, entsprechend US 4 325 082, eine Schaltungsanordnung gemäss dem Oberbegriff des Patentanspruchs 1 bekannt geworden, mit welcher die Messung des optimalen Fokussierungszustandes eines Ladungsträgerstrahls unter Anwendung von Digitalverfahren durchgeführt wird. Hierzu wird ein Elektronenstrahl in einem Anlaufbetrieb, der dem eigentlichen Betrieb als Betriebs-Vorbereitungsphase vorgeschaltet wird, zunächst über ein schwarzweiss-gemustertes Proberaster geführt, um Digitalsignale im Ansprechen auf scharfe Signalübergänge, bedingt durch Übergänge zwischen Schwarzweiss- und Weissschwarz-Markierungen des Proberasters, herbeizuführen. Im Ansprechen auf die Digitalsignale leitet eine Differenzierschaltung die Maximalwerte für die jeweilige Steigung der Übergangsflanken der durch Elektronenstrahlabfühlung von derartigen Markierungen unmittelbar erhaltenen Analogsignale ab. Die sich ergebenden Differentialquotienten für diese Schwarzweiss- bzw. Weissscharz-Markierungen hängen bei Elektronenstrahlabfühlung von der Flankensteilheit der sich unmittelbar ergebenden Analogsignale ab, welche dann ihrerseits von der Fleckgrösse des Elektronenstrahls auf dem Probemuster abhängig ist. Die gemessene Fleckgrösse ist somit ein Mass für den Fokussierungszustand des den Elektronenstrahl beeinflussenden elektronenoptischen Fokussierungs-Linsensystems.

Der Messvorgang läuft im einzelnen so ab, dass ein Proberaster, das eine Anzahl von Schwarzweiss- bzw. Weissschwarz-Markierungen enthält, in mehreren Messintervallen unter jeweils verschiedenen Fokuseinstellungen mit dem Elektronenstrahl vollständig abgefühlt wird. Für jedes Messintervall entsteht so ein entsprechendes Analogsignal, das jeweils zu festgelegten Taktzeiten abgetastet und entsprechend den hierbei auftretenden Momentanwerten digitalisiert wird. Die jeweilige Differenz der sich für benachbarte Taktzeiten ergebenden Digitalwerte wird nach Vorzeichen und Betrag zwischengespeichert, der proportional zur Flankensteigung und damit von der Fokuseinstellung abhängig ist. Durch Vergleich wird anschliessend der sich ergebende grösste Differenzbetrag ermittelt und abgespeichert.

Die sich für mehrere Messintervalle jeweils ergebenden grössten Differenzbeträge werden dann ihrerseits miteinander verglichen, um hieraus wiederum den absolut höchsten Differenzbetrag zur Bestimmung der optimalen Fokuseinstellung zu gewinnen. Die Taktzeit der zum Abtasten des Analogsignals zugeführten Abtastimpulse ist somit bedeutsam, um den Differentialquotienten des Analog-Bildsignals mittels der hier verwendeten, aus entsprechenden Differenziergliedern bestehenden Differentiatoren zu erhalten. Eine derartige Schaltungsanordnung ist äusserst aufwendig, nicht zuletzt auch im Betrieb, so dass Herstellung und Anwendung eines entsprechend ausgerüsteten, automatischen Fokuseinstellungssystems nennenswerter Vereinfachung zugänglich zu machen ist.

Die Erfindung geht also von der automatischen Fokuseinstellung optischer und elektronenoptischer Linsensysteme aus.

Gemäss dem oben aufgeführten Stand der Technik sind entweder zusätzliche optische Bauelemente, verbunden mit hierdurch bedingter Justierungserfordernis, oder Schaltungsglieder und Funktionseinheiten grösserer Anzahl in komplizierten Schaltungsanordnungen erforderlich, um eine optimale Fokuseinstellung des jeweiligen Linsensystemes herbeiführen zu können.

Hier will die Erfindung Abhilfe schaffen. Die Erfindung, wie sie in den Ansprüchen gekennzeichnet ist, löst die Aufgabe, eine Schaltungsanordnung für eine Steuereinrichtung zur Fokuseinstellung eines Linsensystems zu schaffen, indem die Flankensteigung von Bildsignalen lediglich zur Zählen der hierfür benötigten Zeitintervalle ermittelt wird. Dabei werden die Zählergebnisse registriert, indem davon ausgegangen wird, dass Flanken geringerer Steigung zu einem grossen Zählergebnis führen, wohingegen steile Flanken in Form kleiner Zählergebnisse festgehalten werden. Durch Vergleich der sich in den einzelnen aufeinanderfolgenden Messintervallen ergebenden Zählergebnisse untereinander wird automatisch der Minimalwert ermittelt und als Fokussierungskriterium für die optimale Fokuseinstellung ausgenutzt.

Die durch die Erfindung erreichten Vorteile lassen sich im wesentlichen darin sehen, dass bei relativ unkompliziertem Schaltungsaufbau keinerlei Justierungsaufwand erforderlich ist, die Bildsignale analog oder digital zugeführt werden können und eine Verwendung zur Fokuseinstellung sowohl für optische als auch für elektronenoptische Linsensysteme möglich ist.

Die Schaltungsglieder bzw. -einheiten sind relativ einfach in ihrem Aufbau und gestatten eine schnelle Durchführung des Einstellungsvorgangs. Die Schaltungsanordnung selbst lässt sich in Form einer monolithisch integrierten Halbleiterschaltung auf kleinstem Raum realisieren, der bei Anwenden auf optische Linsensysteme gegenüber dem seitens der erforderlichen mechanischen Einstellelemente bedingten Platzbedarf, wie z.B. Stellmotor, praktisch vernachlässigbar ist.

Im folgenden wird die Erfindung anhand von Ausführungsbeispiele darstellenden Zeichnungen näher erläutert.

Es zeigen:

Fig. 1 einen generallen Übersichtsschaltplan der erfindungsgemässen Schaltungsanordnung,

Fig. 2 eine graphische Darstellung eines analogen Bildsignals mit geringer Flankensteigung,

Fig. 3 eine graphische Darstellung eines analogen Bildsignals mit grosser Flankensteigung,

Fig. 4 ein Impulsdiagramm mit einer Impulsfolge, die sich bei geringer Flankensteigung einstellt,

Fig. 5 ein Impulsdiagramm mit einer Impulsfolge, die sich bei grossem Flankenanstieg einstellt,

Fig. 6 ein erstes Beispiel einer erfindungsgemässen Schaltungsanordnung, die auch zur Verwendung für Fokussierungseinstellung von elektronenoptischen Linsensystemen geeignet ist und

Fig. 7 ein zweiten Ausführungsbeispiel einer Schaltungsanordnung zur Fokussierungseinstellung von optischen Linsensystemen.

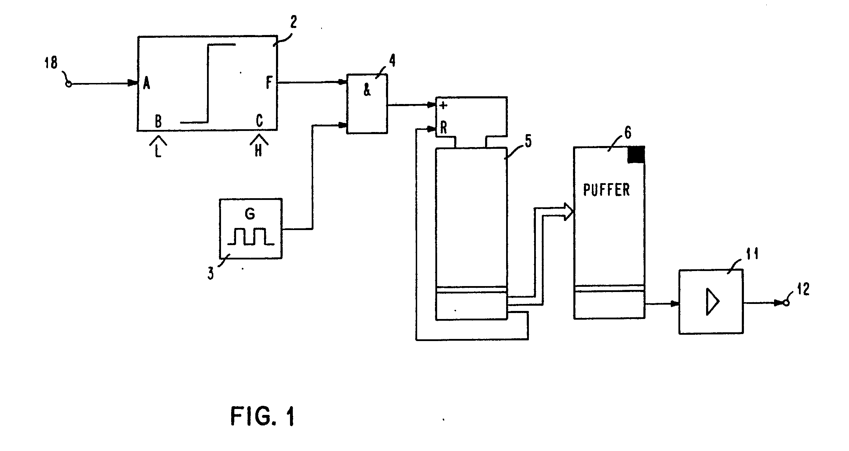

Das Prinzip der Erfindung lässt sich sehr einfach mit Hilfe des in Fig. 1 gezeigten Übersichtsschaltplans aufzeigen. Die Bildsignale werden unabhängig von ihrer Darstellung, also entweder in Form von Analogsignalen oder Digitalsignalen, parallel oder seriell einem Eingangsanschluss 18 zugeführt, um auf einen Eingang A eines Grenzwertdifferenz-Vergleichers 2 übertragen zu werden. Die erfindungsgemäss zu verarbeitenden Bildsignale beruhen auf abrupten Kontrastunterschieden, bedingt durch statische Schwarzweiss-Übergänge in der Dingebene. An den Grenzwertdifferenz-Vergleicher 2 werden ausserdem über Eingänge B und C Kleinstgrenzwert- und Grösstgrenzwertsignale L bzw. H als jeweilige Schwellenwerte angelegt. Auch hierfür ist es gleichgültig, ob Analog- oder Digitaldarstellung der Grenzwertsignale vorgesehen sind. Der Kleinstgrenzwert L und der Grösstgrenzwert H sind in jedem Fall so gewählt, dass ein vorbestimmter Graubereich in der Grauleiter mit dem zu fokussierenden Bild zu erfassen ist. Durch Verschieben dieser Schwellenwerte, entweder in Richtung dunkler oder heller Grautöne, lassen sich bestimmte Graubereiche besser fokussieren als andere; was dann von besonderer Bedeutsamkeit ist, wenn die Schärfentiefe einer Objektivlinse nicht ausreicht, um alle Oberflächenstrukturen einer Dingbene scharf in der Bildebene abzubilden. Ausgang F des Grenzwertdifferenz-Vergleichers 2 ist mit einem ersten Eingang eines Grenzwert-UND-Gliedes 4 verbunden, dessen zweiter Eingang am Ausgang eines Taktgebers 3 liegt. Der Ausgang des Grenzwert-UND-Gliedes 4 liegt am Zähleingang eines Zählers 5, dessen Steuerausgang mit einem Rücksetzeingang R verbunden sein kann, und dessen Zählausgang mit dem Dateneingang eines Puffers 6 verbunden ist, wobei die Zähldaten entweder parallel oder seriell zuführbar sein können. Der Rücksetzeingang des Zählers 5 kann natürlich andererseits auch extern nach Abschluss jedes Zählvorgangs und der Übertragung des Zählergebnisses auf den Puffer 6 zum Rückstellen des Zählers 5 in die Zählausgangsposition ansteuerbar sein. Der Ausgang des Puffers 6 liefert über einen Treiberverstärker 11 Ausgangssignale auf den Anschluss 12 zu weiterer Verwertung, insbesondere zur Scharfeinstellung eines zugeordneten Objektivs.

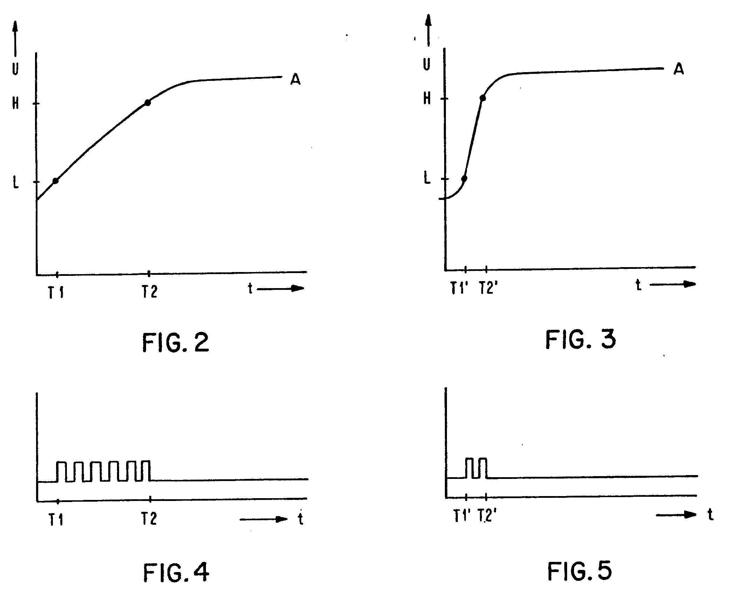

Mit Hilfe einer derartigen Schaltungsanordnung lassen sich durch Bildstrukturen bedingte Kantensteilheiten im Bildsignal zwecks Scharfeinstellung in einfacher Weise optimieren. Anhand der graphischen Darstellungen nach den Fig. 2 bis 5 soll die grundsätzliche Betriebsweise der Erfindung erläutert werden. In Fig. 2 ist der Verlauf eines Analogsignals am Eingang A des Grenzwertdifferenz-Vergleichers 2 bei nichtfokussierter Objektivlinse aufgetragen, wenn eine Kantenstruktur erfasst wird. Hierbei ist der Ordinate die Spannung U zugeordnet, und hierauf sind der Kleinstgrenzwert L und der Grösstgrenzwert H markiert. Das Bildsignal am Eingang A überschreitet bei seinem Anstieg zum Zeitpunkt T1 den Kleinstgrenzwert L, um dann bei weiterem Anstieg zum Zeitpunktk T2 den Grösstgrenzwert H zu erreichen und bei weiterem Signalanstieg zu überschreiten. Da im vorliegenden Fall die Bildsignalkurve eine geringe Steilheit aufweist, liegt ein entsprechend grosses Zeitintervall zwischen den Zeitpunkten T1 und T2, was einer entsprechenden Impulsdauer des am Ausgang F des Grenzwertdifferenz-Vergleichers 2 abgegebenen Rechteckimpulses entspricht.

Dies bedeutet aber, dass der Grenzwertdifferenz-Vergleicher 2 zur Abgabe eines Impulses nur zwischen den Zeitpunkten T1 und T2 geöffnet ist und während der übrigen Zeitabschnitte gesperrt ist. Infolgedessen wird dann auch entsprechend das Grenzwert-UND-Glied 4 über seinem ersten Eingang geöffnet, so dass die Abgabe von Impulsen auf den Zähler 5 jeweils im durch die Zeitpunkte T1 und T2 begrenzten Zeitintervall dank der über seinem zweiten Eingang anliegenden Taktgeberimpulse erfolgt, deren jeweilige Impulsdauer so gewählt ist, dass eine ausreichende Auflösung hinsichtlich der hindurchgelassenen Taktgeberimpulse auch bei grösseren Steilheiten des Bildsignals erzielt werden kann.

Aus dem Impulsdiagramm nach Fig. 4 ist eine beispielsweise abgegebene Taktgeber-Impulsfolge während des Zeitraums T1 bis T2 für eine nicht scharf eingestellte Linse aufgetragen. In diesem Falle muss also das Grenzwert-UND-Glied 4 eine Taktgeber-Impulsfolge relativ grosser Taktgeber-Impulsanzahl auf den Zähler 5 abgeben.

Der in Fig. 3 gezeigte Kurvenverlauf des Bildsignals am Eingang A des Grenzwertdifferenz-Vergleichers 2 im Ansprechen auf eine scharf eingestellte Linse ist im gleichen Koordinatensystem dargestellt wie die graphische Darstellung nach Fig. 2. Gegenüber der graphischen Darstellung nach Fig. 2 zeigt jedoch der Bildsignalverlauf eine wesentlich grössere Steilheit in seinem Anstieg, so dass das Zeitintervall zwischen den Zeitpunkten T1′ und T2′ in diesem Falle entsprechend kurz ist. Dies hat zur Folge, dass das Grenzwert-UND-Glied 4 nur während eines demgemäss kurzen Zeitraums zur Abgabe von Taktgeberimpulsen geöffnet sein kann. Das durch die Zeitpunkte T1′ und T2′ vorgegebene Zeitintervall reicht hier beispielsweise nur aus, zwei Taktgeberimpulse vom Ausgang des Grenzwert-UND-Gliedes 4 auf den Zähleingang des Zählers 5 zu übertragen, wie aus dem Impulsdiagramm nach Fig. 5 ersichtlich.

Ganz allgemein lässt sich sagen, dass die gemessene Steilheit des Kantenprofils ein Mass für die Fokusschärfe ist. Für optimale Fokusschärfe einer Linse wird aber gefordert, dass die Kantenübergänge jeweils möglichst grosse Steilheit im Bildsignalverlauf herbeiführen. Anhand der Diagramme nach den Fig. 2 bis 5 wird zwar davon ausgegangen, dass die Bildsignale in Analogdarstellung vorliegen; ebensogut lässt sich jedoch der oben beschriebene Vorgang auch mit Hilfe eines Grenzwertdifferenz-Vergleichers 2 durchführen, der für Digitalverarbeitung ausgelegt ist.

Hierzu werden der Grösstgrenzwert H und der Kleinstgrenzwert L in Digitaldarstellung angelegt und mit den jeweiligen Digitalwerten eines in seinen Digitalwerten ansteigenden Bildsignals verglichen, um nur dann ein Ausgangssignal am Ausgang F hervorzurufen, wenn die Digitalwerte des jeweiligen Bildsignals zwischen dem Grösstgrenzwert H und dem Kleinstgrenzwert L liegen. Allerdings ist auch hier vorausgesetzt, dass ein in seinen Digitalwerten stetig ansteigendes oder auch abfallendes Bildsignal dem Eingang A zugeführt wird. Geeignete Digitalvergleicher sind an sich bekannt, so dass hier nicht näher darauf eingegangen zu werden braucht, zumal ihre Ausgestaltung im einzelnen für die Erfindung nur von untergeordneter Bedeutung sein kann.

Bei Verarbeitung von sowohl Analog-Bildsignalen als auch Digital-Bildsignalen ist allgemein allerdings zu beachten,dass während einer Fokuseinstellungsmessung Grösstgrenzwert H und Kleinstgrenzwert L konstant zu halten und derart zu wählen sind, dass einzelne Grautöne des Bildes und damit des Bildsignals den Grösstgrenzwert H übersteigen und den Kleinstgrenzwert L an anderen Stellen unterschreiten.

Für jede Fokuseinstellung der Objektivlinse wird somit eine dem ermittelten Zählwert entsprechende Taktgeber-Impulsfolge auf einen der Fokuseinstellung entsprechenden Speicherplatz im Puffer 6 übertragen, um dort die Abgabe eines entsprechenden Signals vom Pufferausgang auf den Treiberverstärker 11 auszulösen, der über den Ausgangsanschluss 12 mit einer geeigneten Linseneinstellungseinrichtung bzw. -anordnung zwecks ihrer Nachstellung verbunden ist.

Die oben beschriebene Fokuseinstellungsmessung wird mehrere Male, mindestens jedoch dreimal, bei verschiedenen Fokuseinstellungen wiederholt, wobei diejenige Fokuseinstellung, bei der der kleinste Zählerstand in Form einer entsprechenden Taktgeber-Impulsfolge im Puffer 6 gespeichert ist, als optimale Fokuseinstellung anzusehen ist. Es versteht sich, dass bei wiederholter Fokuseinstellungsmessung mit verschiedenen Fokuseinstellungen der Zähler 5 jeweils nach Übretragung der ermittelten Taktgeber-Impulsanzahl auf den Puffer 6 vom Zählerausgang über ein Signal auf den Rücksetzeingang R des Zählers 5 wieder rückgesetzt wird.

Durch Auswerten von Bildsignalen innerhalb eines vorgegebenen Fensters lassen sich bestimmte einzelne Bildausschnitte optimal fokussieren, wohingegen der Bildinhalt ausserhalb dieses Fensters dann nicht in die Fokussierungsmessung einbezogen ist. Damit können wahlweise Wiedergabeeffekte für spezielle Verwendungszwecke erzielt werden.

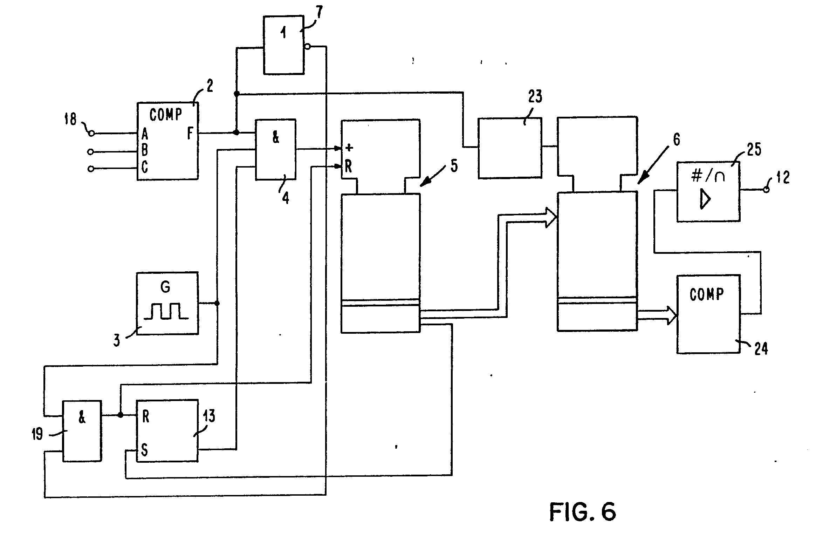

Wie eingangs schon ausgeführt, lässt sich die erfindungsgemässe Anordnung zur Fokuseinstellung nicht nur eines optischen Linsensystems sondern auch eines elektronenoptischen Linsensystems verwenden. Für letztere Anwendung ist eine Schaltungsanordnung, wie sie in Fig. 6 gezeigt ist, besonders geeignet, wenngleich auch diese Schaltungsanordnung zur schrittweisen Fokuseinstellung optischer Linsensysteme herangezogen werden kann. Der Ausgang F des Grenzwertdifferenz-Vergleichers 2 ist hierbei nicht nur mit dem ersten Eingang des Grenzwert-Und-Gliedes 4, sonder auch mit einer Adress-Steuereinheit 23 des als mehrbahniges Register ausgebildeten Puffers 6 verbunden. Ausserdem ist der Ausgang F des Grenzwertdifferenz-Vergleichers 2 an den Eingang eines NICHT-Gliedes 7 angeschlossen. Der Ausgang des NICHT-Gliedes 7 ist mit dem zweiten Eingang eines UND-Gliedes 19 verbunden, dessen erster Eingang am Ausgang des Taktgebers 3 liegt. Der Ausgang des UND-Gliedes 19 ist an den Rücksetzeingang eines bistabilen Kippgliedes 13 angeschlossen.

Im übrigen ist auch hier wiederum der erste Eingang des Grenzwert-UND-Gliedes 4 an den Ausgang F des Grenzwertdifferenz-Vergleichers 2 und der zweite Eingang des Grenzwert-UND-Gliedes 4 an den Taktgeber 3 angeschlossen. Der Zählausgang des Zählers 5 ist mit dem Eingang des Puffers 6 verbunden, dessen Adresse durch die Adress-Steuereinheit 23 mit jeder Eingabe einer Taktgeber-Impulsfolge mittels eines hierin enthaltenen Zuwachszählers jeweils um Eins fortgeschaltet wird. Jeder Registerstufenadresse kann zweckmässiger je ein bestimmter Fokuseinstellwert zugeordnet sein, um den Einstellvorgang zu vereinfachen.

Der Ausgang des Puffers 6 liegt am Eingang eines Minimumvergleichers 24, dem die im Puffer 6 gespeicherten Taktgeber-Impulsfolgen parallel zugeführt werden, um hieraus diejenige Taktgeber-Impulsfolge zu ermitteln, deren Taktgeber-Impulsanzahl von allen die kleinste ist. Eine Schaltungsanordnung für einen derartigen Minimumvergleicher ist im «IBM Technical Disclosure Bulletin», Bd. 22, Nr. 7, Dezember 1979 auf den Seiten 2671 und 2672 zusammen mit ihrer Betriebsweise beschrieben. Da sich die vorliegende Erfindung nicht auf eine Schaltungsanordnung für einen Minimumvergleicher 24 als solche erstreckt, wird hierauf auch nicht näher eingegangen.

Der Ausgang des Minimumvergleichers 24 kann beispielsweise einem Digital/Analogumsetzer 25 mit hierin enthaltenem Treiberverstärker zugeführt werden, so dass am Ausgangsanschluss 12 Einstellsignale auftreten, die zu optimaler Fokuseinstellung unmittelbar dienlich sind.

Die Betriebsweise der Schaltungsanordnung nach Fig. 6 ist wie folgt: Mit Rücksetzen des Zählers 5 auf die niedrigste Zählstufe, also in die Zähl-Ausgangsposition, was automatisch erfolgt, wenn vom Grenzwertdifferenz-Vergleicher 2 kein Impuls anliegt, wird das bistabile Kippglied 13 über ein Signal vom Ausgang des Zählers 5 auf seinen Setzeingang in den Einzustand gesetzt. Dies hat zur Folge, dass das Grenzwert-UND-Glied 4 über seinem dritten Eingang zur Übertragung von Zählimpulsen auf den Zähler 5 durch ein Signal vom Ausgang des bistabilen Kippgliedes 13 vorbereitet wird. Da am zweiten Eingang des Grenzwert-UND-Gliedes 4 der Taktgeberpuls dauernd anliegt, werden dann die Taktgeberimpulse als Zählimpulse auf den Zähler 5 übertragen, sobald ein Ausgangsimpuls vom Grenzwertdifferenz-Vergleicher 2 am ersten Eingang des Grenzwert-UND-Gliedes 4 anliegt.

Am ersten Eingang des UND-Gliedes 19 liegt der Taktgeberpuls ebenfalls dauernd an, so dass beim Auftreten der Hinterflanke des Ausgangssignals vom Grenzwertdifferenz-Vergleicher 2 über das NICHT-Glied 7 das UND-Glied 19 zur Übertragung eines Impulses auf den Rücksetzeingang des Zählers 5 sowie auf den Rücksetzeingang des bistabilen Kippgliedes 13 freigegeben wird. Der Ausgang des bistabilen Kippgliedes 13 gibt dabei ein negatives Signal auf den dritten Eingang des Grenzwert-UND-Gliedes 4 ab, so dass dieses zur weiteren Übertragung von Taktgeberimpulsen auf den Zähler 5 während dessen Rücksetzvorgang gesperrt ist.

Da das Zählergebnis im Zähler 5 vor dessen Rücksetzen bereits auf den Puffer 6 übertragen worden ist, indem es, wie bereits erwähnt, durch Einwirken der Grenzwertdifferenz-Vergleicherausgangssignale auf die Adress-Steuereinheit 23 und damit bedingter Adressenfortschaltung mittels des hierin enthaltenen Zuwachszählers in den vorgesehenen Speicherplatz eingegeben worden ist, kann der Vergleichsvorgang im Minimumvergleicher 24 nach Vorliegen der entsprechenden Anzahl von Zählergebnissen, also der im Puffer 6 gespeicherten Taktgeber-Impulsfolgen, wovon ja eine grössere Anzahl für optimale Einstellung der Fokussierung erforderlich ist, störungsfrei ablaufen.

Die aus den Registerstufen des Puffers 6 ausgelesenen Zählergebnisse werden also zusammen mit ihrer jeweiligen Registerstufenadresse auf den Minimumvergleicher 24 übertragen. Bei jeweiliger Auswahl des kleinsten Zählergebnisses wird die betreffende Registerstufenadresse, der ja ein bestimmter Fokuseinstellwert zugeordnet ist, vom Minimumvergleicher 24 abgegeben. Alternativ kann natürlich auch ohne Übertragung der Registerstufenadresse auf den Minimumvergleicher 24 das jeweilige minimale Zählergebnis vom Minimumvergleicher 24 abgegeben werden, um als Einstellkriterium verwendet zu werden, was zur Einstellung elektronenoptischer Linsen zweckmässig sein kann.

Wenn auch die vom Minimumvergleicher ausgelösten Impulse zur Steuerung eines Stellmotors zwecks Einstellens eines optischen Objektivs dienen können, ergibt sich jedoch eine besonders vorteilhafte Betriebsweise zur optimalen Fokuseinstellung von elektronenoptischen Linsen, wenn der am Ausgang des Minimumvergleichers 24 liegende Treiberverstärker zusammen mit einem Digital/Analogumsetzer 25 betrieben wird. Ein derartiger Digital/Analogumsetzverstärker 25 kann dann über den Ausgangsanschluss 12 den erforderlichen Strom für ein elektromagnetisches Fokussierungssystem abgeben.

Eine Schaltungsanordnung, die zu schrittweiser Steuerung eines Stellmotors zwecks Objektivverschiebung für die Scharfeinstellung einer optischen Objektivlinse günstig ist, geht aus Fig. 7 hervor. Die Eingangsschaltung zum Zähler 5 entspricht dabei im wesentlichen der der Fig. 6, wenn von durch die jeweils andersartige Betriebsweise der Zähler 5 bedingten geringfügigen Änderungen abgesehen wird.

Eine Fernsehkamera 1 mit einer durch einen hier nicht gezeigten Stellmotor schrittweise vorschiebbaren Objektivlinse, wie es beispielsweise aus dem eingangs genannten Artikel in der «Funkschau», Heft 2, 1983, auf den Seiten 44 und 45 hervorgeht, gibt die Bildsignale an einen Eingangsanschluss 18 des Grenzwertdifferenz-Vergleichers 2 ab. Der Ausgang des Grenzwertdifferenz-Vergleichers 2 liegt ebenfalls wieder am ersten Eingang des Grenzwert-UND-Gliedes 4 und ausserdem noch an einem negierten Eingang eines UND-Gliedes 15, dessen zweiter Anschluss am Ausgang des Taktgebers 3 liegt. Der Ausgang des UND-Gliedes 15 ist mit dem Vorwärts-Zähleingang des Zählers 5 und mit dem Rücksetzeingang des bistabilen Kippgliedes 13 verbunden. Während auch hier wiederum der Ausgang des Taktgebers 3 am zweiten Eingang des Grenzwert-UND-Gliedes 4 und der Ausgang des bistabilen Kippgliedes 13 mit dem dritten Eingang des Grenzwert-UND-Gliedes 4 verbunden ist, ist der Ausgang des Grenzwert-UND-Gliedes 4 über Leitung 14 sowohl mit dem Rückwärts-Zähleingang des Zählers 5 als auch mit den ersten Eingängen von Registerstufen-UND-Gliedern 8 sowie von Ausgangs-UND-Gliedern 9 verbunden.

Über eine Leitung vom Übertragungsausgang des Zählers 5 zum Setzeingang der bistabilen Kippstufe 13 wird jeweils ein Impuls übertragen, wenn die Zählstufe mit dem höchsten Zählinhalt des Zählers 5 in den Einzustand gelangt. Die Ausgänge der Zählstufen des Zählers 5 sind jeweils mit einem zweiten Eingang der Registerstufen-UND-Glieder 8 verbunden. Jedes Registerstufen-UND-Glied 8 ist einer Registerstufe des Puffers 6 derart zugeordnet, dass die Registerstufen-UND-Glieder 8 bei Durchlass in ihrem Einzustand jeweils den Inhalt der betreffenden Zählerstufe auf die derart zugeordnete Registerstufe abgeben.

Die Setzeingänge der Registerstufen des Puffers 6 sind jeweils mit einem zweiten Eingang der Ausgangs-UND-Glieder 9 verbunden. Die Rücksetzausgänge der Registerstufen des Puffers 6, die jeweils der Zählstufe mit dem nächsthöheren Zählwert im Zähler 5 zugeordnet sind, liegen jeweils am dritten Eingang der Ausgangs-UND-Glieder 9, wobei das den absolut niedrigsten Zählwert aus dem Puffer 6 übernehmende Ausgangs-UND-Glied von den Ausgangs-UND-Gliedern 9 lediglich neben dem ersten noch einen zweiten Eingang enthält, der mit dem Setzausgang der den absolut niedrigsten Zählwert speichernden Registerstufe des Puffers 6 verbunden ist.

Die Ausgänge der Ausgangs-UND-Glieder 9 sind an die Eingänge eines Ausgangs-ODER-Gliedes 10 angeschlossen, dessen Ausgangsleitung 16 den Eingang des Treiberverstärkers 11 steuert. Der Ausgang des Treiberverstärkers 11 steuert über seinen Ausgangsanschluss 12 die schrittweise Drehung des Stellmotors zum Verschieben der Objektivlinse der Fernsehkamera 1 zwecks optimaler Fokuseinstellung.

Die Betriebsweise der Schaltungsanordnung nach Fig. 7 ergibt sich wie folgt. Bevor eine erste Fokuseinstellung aufgenommen wird, ist der Zähler 5 in einer Betriebsvorbereitungsphase durch Vorwärtszählen bis zum höheren Zählstand gefüllt. Bei Erreichen des höchsten Zählstandes des Zählers 5 wird ein Impuls vom Übertragungsgang des Zählers 5 auf den Setzeingang des bistabilen Kippgliedes 13 übertragen, so dass dann der dritte Eingang des Grenzwert-UND-Gliedes 4 im Ansprechen auf den Ausgangspegel des bistabilen Kippgliedes 13 die Übertragung eines Impulses vorbereitet. Mit Überschreiten des Kleinstgrenzwertes L durch das dem Eingang A des Grenzwertdifferenz-Vergleichers 2 zugeführte Bildsignal wird das Grenzwert-UND-Glied 4 zur Übertragung der Taktgeberimpulse vom Taktgeber 3 auf den Rückwärts-Zähleingang des Zählers 5 freigegeben. Mit Einsetzen des Ausgangsimpulses vom Grenzwertdifferenz-Vergleicher 2 wird gleichzeitig das UND-Glied 15 gesperrt und damit auch der Vorwärts-Zähleingang des Zählers 5 unwirksam. Durch die über die Leitung 14 vom Ausgang des Grenzwert-UND-Gliedes 4 während der Grenzwertdifferenz-Vergleicherimpulsdauer übertragenen Taktgeberimpulse wird der Rückwärts-Zähleingang des Zählers 5 wirksam, um den voll aufgefüllten Zähler 5 abwärts zu zählen, und zwar so lange, bis das Grenzwert-UND-Glied 4 mit der Hinterflanke des vom Grenzwertdifferenz-Vergleicher 2 abgegebenen Ausgangsimpulses zur Übertragung weiterer Taktgeberimpulse gesperrt wird. Dies bedeutet, dass dann das zweite UND-Glied 15 die Übertragung darauffolgender Taktgeberimpulse auf den Vorwärts-Zähleingang des Zählers 5 übernimmt, um so den Zähler 5 wieder auf den höchsten Zählstand zu bringen.

Vor Umschalten des Zählers 5 von Rückwärtszählung auf Vorwärtszählung werden allerdings noch die Setzzustände des Zählers 5 auf die zugeordneten Registerstufen des Puffers 6 übertragen, da die Registerstufen-UND-Glieder 8 durch die während des Rückwärts-Zählvorgangs anliegenden Taktgeberimpulse vorbereitet sind. Gleichzeitig werden auch aufeinanderfolgend die entsprechenden Ausgangs-UND-Glieder 9 durch die sowohl von den Setzausgängen der nicht umgeschalteten Zählstufen des Zählers 5 abgegebenen Impulse als auch durch die Signale der Rücksetzausgänge der jeweils nächsthöheren Zählstufe für die jeweilige Taktimpulsdauer geöffnet, so dass das Ausgangs-ODER-Glied 10 während der ersten Fokuseinstellungsmessung eine Taktgeber-Impulsfolge abgibt, deren Impulsanzahl der vom Grenzwert-UND-Glied 4 abgegebenen Impulsanzahl entspricht.

Der Zähler 5 wird nach der ersten Fokuseinstellungsmessung wieder durch Vorwärtszählen auf seinen Höchststand gebracht, wobei aber der während der ersten Fokuseinstellungsmessung gespeicherte Zählstand im Puffer 6 beibehalten bleibt. Bei anschliessender zweiter Fokuseinstellungsmessung werden durch das Grenzwert-UND-Glied 4 naturgemäss weniger Taktimpulse auf den Rückwärts-Zähleingang des Zählers 5 übertragen, wenn bei nunmehr steilerer Anstiegsflanke des Bildsignals die Dauer des Ausgangsimpulses des Grenzwertdifferenz-Vergleichers 2 entsprechend kleiner ausfällt. Dies hat zur Folge, dass zumindest eine weitere Registerstufe des Puffers 6 unter Abgabe eines entsprechenden Ausgangsimpulses auf das Ausgangs-ODER-Glied 10 in den Setzzustand geschaltet wird, da dann auch dementsprechend weniger Zählerstufen, gerechnet vom Höchstzählstand, im Zähler 5 rückgesetzt werden. Damit verbleiben aber mehr Zählerstufen im Setzzustand, so dass demgemäss auch mehr Registerstufen als bei der ersten Fokuseinstellungsmessung in den Setzzustand geschaltet werden. Das gilt allerdings nur, wenn die Fokuseinstellung bei der ersten Messung noch nicht optimal war. In, in den Zwischenzeiten zwischen aufeinanderfolgenden Fokuseinstellungsmessungen liegenden Zeitabschnitten bleibt der Rückwärts-Zähleingang des Zählers 5 unter der Wirkung des bistabilen Kippgliedes 13 gesperrt, da dann durch Absenken seines Ausgangspegels das Grenzwert-UND-Glied bis zum Einsetzen der Betriebsvorbereitungsphase ebenfalls gesperrt ist.

Der oben beschriebene Gesamtvorgang wiederholt sich, bis bei einer Fokuseinstellungsmessung mit Hilfe des Zählers 5 eine gleiche oder eine höhere Taktgeber-Impulsanzahl als im vorherigen Zählvorgang an seinem Rückwärtseingang gezählt wird. In diesem Falle können nämlich keine weiteren Registerstufen des Puffers 6 in den Speicherzustand geschaltet werden, da die dann rückwärts gezählten Zählstufen nur bereits in den vorhergehenden Fokuseinstellungsmessungen gesetzte Registerstufen ansteuern, also unwirksam sind. Demgemäss werden weitere Ausgangs-UND-Glieder 9 auch nicht geöffnet, so dass die Anzahl der Ausgangsimpulse am Ausgangsanschluss 12 weiterhin konstant bei der durch die zuletzt eingegebene Taktimpulsfolge festgelegten Anzahl gehalten wird. Damit bleibt die einmal gewonnene optimale Fokuseinstellung erhalten.

Ein Rücksetzeingang am mit dem Rücksetzeingang des Puffers 6 in Verbindung stehenden Anschluss 17 löscht den Puffer 6, wenn die Fokuseinstellungs-Messvorgänge alle abgeschlossen sind. Zur Fokuseinstellung der Objektivlinse der Fernsehkamera 1 wird vorab das Objektiv in eine Maximaloder Minimalstellung gebracht, um dann schrittweise während der Messvorgänge mittels der vom Ausgangsanschluss 12 aus den Stellmotor übertragenen Schrittimpulse auf die optimale Fokuseinstellung gebracht zu werden. Vorteilhaft ist hierbei, dass bei zunächst vorhandener Anstiegsflanke geringer Steilheit des Bildsignals der Schrittmotor durch die dann verhältnismässig grosse Anzahl von Taktgeberimpulsen schnell eine Grobeinstellung des Objektivs herbeiführt, um anschliessend in den darauffolgenden Fokuseinstellungsmessungen mit jeweils verhältnismässig kleiner Taktgeber-Impulsanzahl, bedingt durch die dann jeweils grössere Steilheit im Flankenanstieg des Bildsignals, eine Feineinstellung des Objektivs durch Nachstellen mit jeweils kleiner Impulsanzahl vorzunehmen.

Wenn auch, wie oben beschrieben, von einem Flankenanstieg der Bildsignale ausgegangen wird, so kann ebensogut auch der Flankenabfall der Bildsignale ausgenutzt werden.

**Patentansprüche**

1. Schaltungsanordnung für eine Steuereinrichtung zur Fokuseinstellung eines Linsensystems durch Zuhilfenahme von digitalen Speicher- (6) und Vergleichermitteln (2) unter schrittweiser Näherung im Ansprechen auf innerhalb entsprechender, durch Steuerung seitens eines Taktgebers (3) festgelegter Messintervalle zugeführte Bildsignale, die sich aus Kontrastunterschieden, bedingt durch statische Schwarzweiss-Übergänge, in der Bildebene ergeben, gekennzeichnet:
— durch einen Grenzwertdifferenz-Vergleicher (2) mit einem Bildsignaleingang (A), mit einem ersten Referenzeingang (B) zum Anlegen eines Kleinstgrenzwert-Signals (L), mit einem zweiten Referenzeingang (C) zum Anlegen eines Grösstgrenzwertsignals (H) und mit einem Ausgang (F) zur Abgabe eines im Ansprechen auf zugeführte Bildsignale jeweils hervorgerufenen, in seiner Impulsdauer sowohl durch die wahlweise festzulegende Grenzwertdifferenz, als auch durch die zeitliche Änderung eines sich in seiner Intensität stetig verstärkenden oder stetig abschwächenden Bildsignals definierten, rechteckigen Vergleicherimpulses,
— durch ein Grenzwert-UND-Glied (4) mit einem ersten, an den Ausgang (F) des Grenzwertdifferenz-Vergleichers (2) angeschlossenen Eingang, mit einem zweiten, an den Ausgang des Rechteckimpulses mit gegenüber der Impulsdauer des Vergleicherimpulses wesentlich kürzerer Impulsdauer erzeugenden Taktgebers (3) angeschlossenen Eingang,
— durch einen Zähler (5), der nach jeweiliger Erfassung einer hierauf vom Ausgang des Grenzwert-UND-Gliedes (4) übertragenen Taktgeber-Impulsfolge in die Zählausgangsposition rückführbar ist, und
— durch einen mit dem Zähler (5) verbundenen Puffer (6) zur Zwischenspeicherung der vom Zähler (5) übertragenen Fokuseinstellwerte.

2. Schaltungsanordnung nach Anspruch 1, dadurch gekennzeichnet, dass die an den Grenzwertdifferenz-Vergleicher (2) angelegten Kleinst- und Grösstgrenzwerte (L, H) zur Erfassung eines vorbestimmten, im Bildsignal enthaltenen Graubereichs der Grauleiter gewählt sind.

3. Schaltungsanordnung nach Anspruch 1 und/ oder 2, dadurch gekennzeichnet, dass ein bistabiles Kippglied (13) mit seinem Ausgang an einem dritten Eingang des Grenzwert-UND-Gliedes (4) liegt, mit seinem Setzeingang (S) an einen bei rückgeführter Zählausgangsposition beaufschlagten Übertragungsausgang des Zählers (5) angeschlossen ist und über seinen Rücksetzeingang (R) gleichzeitig mit dem Zähl-Rückstellanschluss des Zählers (5) vom Ausgang des Grenzwertdifferenz-Vergleichers (2) ansteuerbar ist.

4. Schaltungsanordnung mindestens nach Anspruch 3, dadurch gekennzeichnet, dass der Ausgang des Puffers (6) über einen Treiberverstärker (11) mit dem Ausgangsanschluss (12) der Schaltungsanordnung verbunden ist.

5. Schaltungsanordnung mindestens nach den Ansprüchen 1 und 3, dadurch gekennzeichnet,
— dass der Ausgang (F) des Grenzwertdifferenz-Vergleichers (2) mit dem Eingang einer einen mit jedem Vergleicherimpuls die Adresse des als mehrbahniges Register ausgebildeten Puffers (6) um die Einheit fortschaltenden Zuwachszähler enthaltenden Adress-Steuereinheit (23) verbunden ist,
— dass die zur Speicherung der in den aufeinanderfolgenden Messintervallen zugeführten Taktgeber-Impulsfolgen dienenden Registerbahn-Adressdaten zusätzlich Einstellgrössen zur Fokuseinstellung darstellen und dass über den Pufferausgang unter Steuerung durch einen Minimumvergleicher (24) ein der Registerbahnadresse, enthaltend die kleinste Anzahl der Taktgeberimpulse von allen in den Registerbahnen gespeicherten Taktgeber-Impulsfolgen, entsprechendes Fokuseinstellungssignal übertragen wird.

6. Schaltungsanordnung nach den Ansprüchen 4 und 5, dadurch gekennzeichnet, dass der Ausgang des Minimumvergleichers (24) am Eingang eines Treiberverstärkers in Form eines Digital/Analogumsetzverstärkers (25) liegt.

7. Schaltungsanordnung nach den Ansprüchen 1 bis 4, dadurch gekennzeichnet,

— dass der während des jeweiligen Zeitraums zwischen zwei aufeinanderfolgenden Messintervallen vorwärts bis zum maximalen Zählstand fortgeschaltete Zähler (5) über seinen Rückwärts-Zähleingang (–) am Ausgang des Grenzwert-UND-Gliedes (4) liegt,

— dass die Stufenausgänge des Zählers (5) jeweils mit einem ersten Eingang von Registerstufen-UND-Gliedern (8) verbunden sind, deren zweite Eingänge am Ausgang des Grenzwert-UND-Gliedes (4) liegen,

— dass die Ausgänge der Registerstufen-UND-Glieder (8) je mit einem Eingang von Registerstufen des als Register ausgebildeten Puffers (6) verbunden sind,

— dass die Setzausgänge (S) der Registerstufen je mit einem ersten Eingang eines jeweils zugeordneten Ausgangs-UND-Gliedes (9) verbunden sind, dessen jeweiliger zweiter Eingang am Ausgang des Grenzwert-UND-Gliedes (4) liegt, und dessen jeweiliger dritter Eingang unter Ausschluss desjenigen der Ausgangs-UND-Glieder (9), dessen erster Eingang mit dem Setzeingang (S) der den absolut niedrigsten Zählstand des Zählers (5) aufnehmenden Registerstufe verbunden ist, an die Rücksetzeingänge (R) der jeweils den nächsthöheren Zählstand aufnehmenden Registerstufen angeschlossen ist,

— dass die Ausgänge des Ausgangs-UND-Glieder (9) an jeweils zugeordneten Eingängen eines Ausgangs-ODER-Gliedes (10) liegen,

— dass der Ausgang des Ausgangs-ODER-Gliedes (10) am Eingang des Treiberverstärkers (11) liegt und

— dass der Rücksetzeingang (R) des Puffers (6) über den Steueranschluss (17) durch einen Rücksetzimpuls nach Anschluss der Fokuseinstellung beaufschlagbar ist.

8. Schaltungsanordnung nach den Ansprüchen 1 bis 7, dadurch gekennzeichnet, dass der Grenzwertdifferenz-Vergleicher (2) zur Aufnahme von Analogspannungs-Bildsignalen eingerichtet ist und an die Referenzeingänge (B, C) die Grösst- und Kleinstgrenzwertsignale in Form entsprechender Gleichspannungspegel angelegt sind.

9. Schaltungsanordnung mindestens nach Anspruch 7, dadurch gekennzeichnet, dass ihr Ausgangsanschluss (12) mit einem impulsgesteuerten Schrittschaltmotor zwecks schrittweiser Änderung der Fokuseinstellung eines optischen Objektivlinsensystems einer Fernsehkamera (1) bis zum Erreichen des Optimalwerts verbunden ist.

## Claims

1. Circuit for a control device for focussing a lens system by using digital storing (6) and comparing means (2), with stepwise approximation in response to video signals applied within corresponding measuring intervals determined through control by means of a clock (3), said video signals being obtained in the image plane from contrast differences due to static black/white transitions, characterized by:

— a threshold difference comparator (2) with a video signal input (A), with a first reference input (B) for applying a low threshold signal (L), with a second reference input (C) for applying a high threshold signal (H), and with an output (F) for generating a rectangular comparator pulse respectively generated in response to applied video signals as well as defined in its pulse duration by the selectively determinable threshold difference as well as by the time modification of a video signal continuously increasing or decreasing in its intensity,

— a threshold AND gate (4) with a first input connected to the output (F) of threshold difference comparator (2), with a second input connected to the output of the clock (3) producing rectangular pulses that are substantially shorter than the comparator pulse,

— a counter (5) which after recording a clock pulse sequence transferred by the output of the threshold AND gate (4) is reset into its initial counting position, and

— a buffer (6) connected to the counter (5) for buffering the focussing data transferred by the counter (5).

2. Circuit as claimed in claim 1, characterized in that the low and high thresholds (L, H) applied to the threshold difference comparator (2) are selected for recording a predetermined grey range of the grey scale comprised in the video signal.

3. Circuit as claimed in claim 1 and/or 2, characterized in that a flipflop (13) is applied with its output to a third input of the threshold AND gate (4), that it is connected with its set input (S) to a common output of the counter (5) activated upon a reset counter start position, and that it is controllable via its reset input (R) simultaneously with the count decrementing connection of the counter (5) by the output of the threshold difference comparator (2).

4. Circuit as claimed at least in claim 3, characterized in that the output of the buffer (6) is connected via a driver (11) to the output terminal (12) of the circuit.

5. Circuit as claimed at least in claim 1 and 3, characterized in that

— the output (F) of the threshold difference comparator (2) is connected to the input of an address control unit (23) comprising an incrementing counter incrementing by the unit, with each compare pulse, the address of the buffer (6) designed as a multi-line register

— that the register line address data for storing the clock pulse sequences applied in the successive measuring intervals are in addition adjusting data for focussing, and that via the buffer output, under control by a minimum comparator (24), a focussing signal corresponding to the register line address which contains the smallest number of clock pulses of all clock pulse sequences stored in the register lines is transferred.

6. Circuit as claimed in claims 4 and 5, characterized in that the output of the minimum comparator (24) is applied to the input of a driver in the form of a digital/analog converter amplifier (25).

7. Circuit as claimed in any one of claims 1 to 4, characterized in that

— the counter (5) incremented up to the maximum count during the respective period between two successive measuring intervals as applied via its decrementing input (–) at the output of the threshold AND gate (4)

— the stage outputs of the counter (5) are respectively connected to a first input of register stage AND gates (8) whose second inputs are applied to the outer of the threshold AND gate (4)

— the outputs of the register AND gates (8) are respectively connected to an input of register stages of the buffer (6) designed as a register

— the set outputs (S) of the register stages are respectively connected to a first input of a respectively associated output AND gate (9),

whose respective second input is applied to the output of the threshold AND gate (4), and whose respective third input is connected, excluding that output AND gate (9) whose first input is connected to the set input (S) of the register stage with the absolutely lowest count of counter (5), to the reset inputs (R) of the register stages respectively receiving the next higher count,

— the outputs of the output AND gates (9) are applied to respectively associated inputs of an output OR gate (10)

— the output of the output OR gate (10) is applied to the input of the driver (11), and

— that the reset input (R) of the buffer (6) can be activated via the control terminal (17) by a reset pulse after the termination of the focus adjusting process.

8. Circuit as claimed in any one of claims 1 to 7, characterized in that the threshold difference comparator (2) is designed for receiving analog voltage video signals, and that to the reference inputs (B, C) the high and low threshold signals are applied in the form of corresponding DC levels.

9. Circuit as claimed at least in claim 7, characterized in that its output terminal (12) is connected to a pulse-controlled stepping motor for the stepwise modification of the focus adjustment of an optical objective lens system of a television camera (1) until the optimum value is reached.

## Revendications

1. Agencement de circuiti pour un dispositif de commande du réglage de focalisation d'un système de lentilles faisant intervenir des moyens numériques de mémorisation (6) et de comparaison (2), avec approximation échelonnée en réponse à des signaux d'image introduits dans des intervalles de mesure correspondants établis par commande au moyen d'une horloge (3), et qui sont produits dans le plan-image en fonction de différences de contraste, causées par des transitions noir-blanc statiques, caractérisé:

— par un comparateur de différence de valeurs-limites (2) comportant une entrée de signal d'image (A), une première entrée de référence (B) servant à l'application d'un signal de valeur-limité minimale (L), une seconde entrée de référence (C) servant à l'application d'un signal de valeur-limite maximale (H) et une sortie (F) servant à produire, à la sortie du comparateur une impulsion rectangulaire, engendrée à chaque fois en réponse à des signaux d'image appliqués, et définie en ce qui concerne sa durée, d'une part, par la différence de valeurs-limites à établir sélectivement et, d'autre part, également, par la variation temporelle d'un signal d'image dont l'intensité augmente constamment ou diminue constamment,

— par une porte-ET de valeur-limite (4) comportant une première entrée reliée à la sortie (F) du comparateur de différence de valeurs-limites (2), une seconde entrée reliée à la sortie de l'impulsion rectangulaire au moyen d'un horloge (3) produisant des impulsions d'une durée bien plus courte que celle de l'impulsion du comparateur,

— par un compteur (5), qui peut être ramené dans la position initiale de comptage après une réception correspondante d'une séquence d'impulsions d'horloge transmises par la sortie de la porte-ET de valeur-limite (4),

— par une mémoire-tampon (6) reliée au compteur (5) en vue d'une mémorisation intermédiaire des valeurs de réglage de focalisation transmisse par le compteur (5).

2. Agencement de circuit selon la revendication 1, caractérisé en ce que les valeurs-limites maximale et minimale (L, H) appliquées au comparateur de différence de valeurs-limites (2) sont choisies en vue d'une définition d'une plage de gris prédéterminée, contenue dans le signal d'image, de l'échelle de gris.

3. Agencement de circuit selon la revendication 1 et/ou 2, caractérisé en ce qu'une bascule bistable (13) est reliée par sa sortie à une troisième entrée de la porte-ET de valeur-limite (4), est reliée par son entrée d'activation (S) à une sortie de report du compteur (5) qui est sollicitée dans le cas d'une position de sortie de comptage régressif, et qui peut être excitée par l'intermédiaire de son entrée de désactiviation (R) simultanément par l'entrée de comptage régressif du compteur (5) à partir de la sortie du comparateur de différence de valeurs-limites (2).

4. Agencement de circuit selon au moins la revendication 3, caractérisé en ce que la sortie de la mémoire-tampon (6) est reliée par l'intermédiaire d'un amplificateur-pilote (11) avec la borne de sortie (12) de l'agencement de circuit.

5. Agencement de circuit selon au moins une des revendications 1 et 3, caractérisé en ce que:

— la sortie (F) du comparateur de différence de valeurs-limites (2) est reliée à l'entrée d'une unité de commande d'adressage (23) contenant un compteur progressif qui fait avancer d'une unité, à chaque impulsion de sortie du comparateur, l'adresse de la mémoire-tampon (6) agencée sous forme d'un registre à plusieurs voies,

— les données d'adresses de voies de registre servant à la mémorisation des séquences d'impulsions d'horloge introduites dans les intervalles de mesure successifs représentent additionnellement des grandeurs de réglage intervenant dans le réglage de focalisation, et en ce que, par l'intermédiaire de la sortie de la mémoire-tampon et sous la commande d'un comparateur de minimum (24), il se produit une transmission d'un signal de réglage de focalisation, contenant l'adresse de voie de registre et correspondant au nombre minimal des impulsions d'horloge de toutes les séquences d'impulsions d'horloge mémorisées dans les voies de registre.

6. Agencement de circuit selon les revendications 4 et 5, caractérisé en ce que la sortie du comparateur de minimum (24) est reliée à l'entrée d'un amplificateur-pilote se présentant sous la forme d'un amplificateur à conversion numérique/analogique (25).

7. Agencement de circuit selon les revendications 1 à 4, caractérisé en ce que:
— le compteur (5) effectuant un comptage progressif jusqu'au compte maximal pendant la période correspondante s'écoulant entre deux intervalles de mesure successifs est relié par l'intermédiaire de son entrée de comptage régressif (–) à la sortie de la porte-ET de valeur-limite (4),
— les sorties d'étages du compteur (5) sont respectivement reliées à une première entrée des portes-ET d'étages de registre (8), dont les secondes entrées sont reliées à la sortie de la porte-ET de valeur-limite (4);
— les sorties des portes-ET d'étages de registre (8) sont chacune reliée à une entrée des étages de registre de la mémoire-tampon (6) agencée comme un registre;
— les sorties d'activation (S) des étages de registre sont respectivement reliées à une première entrée d'une porte-ET de sortie (9) respectivement associée, dont une seconde entrée respective est reliée à la sortie de la porte-ET de valeur-limite (4), et

dont une troisième entrée respective est reliée, à l'exclusion de celles des portes-ET de sortie (9), dont la première entrée est reliée à l'entrée d'activation (S) de l'étage de registre recevant le compte de valeur absolue minimale du compteur (5),

aux entrées de désactivation (R) des étages de registre recevant respectivement le compte immédiatement supérieur,
— les sorties des portes-ET de sortie (9) sont reliées aux entrées respectivement associées d'une porte-OU de sortie (10),
— la sortie de la porte-OU de sortie (10) est reliée à l'entrée de l'amplificateur-pilote (11), et
— l'entrée de retour à l'état initial (R) de la mémoire-tampon (6) peut être sollicitée, par l'intermédiaire de la borne de commande (17), par une impulsion de retour à l'état initial après terminaison du réglage de focalisation.

8. Agencement de circuit selon les revendications 1 à 7, caractérisé en ce que le comparateur de différence de valeurs-limites (2) est agencé de manière à recevoir des signaux d'image en tension analogique, et les signaux de valeurs-limites maximale et minimale sont appliquées aux entrées de référence (B, C) sous la forme de niveaux de tension continue correspondants.

9. Agencement de circuit selon au moins la revendication 7, caractérisé en ce que sa borne de sortie (12) est reliée à un moteur d'actionnement pas-à-pas commandé par impulsions en vue de modifier pas-à-pas le réglage de focalisation d'un système optique de lentilles-objectifs d'une caméra de télévision (1) jusqu'à ce que la valeur optimale soit atteinte.

FIG. 1

FIG. 2

FIG. 3

FIG. 4

FIG. 5

FIG. 6